# EUROPEAN PATENT SPECIFICATION

(11) **EP 4 499 471 B1**
(45) Date of publication and mention of the grant of the patent: **22.10.2025**
(21) Application number: 23714663.4
(22) Date of filing: 22.03.2023
(51) Int. Cl.: B60W 50/14, B60W 30/182

(54) **CONTROL SYSTEM AND METHOD FOR INTERFACING WITH AN AUTOMATABLE FUNCTION OF A VEHICLE**
STEUERUNGSSYSTEM UND VERFAHREN ZUR SCHNITTSTELLENBILDUNG MIT EINER AUTOMATISIERBAREN FUNKTION EINES FAHRZEUGS
SYSTÈME DE COMMANDE ET PROCÉDÉ D'INTERFAÇAGE AVEC UNE FONCTION AUTOMATISABLE D'UN VÉHICULE

(30) Priority: 24.03.2022 GB 202204183
(43) Date of publication of application: 05.02.2025
(73) Proprietor: Jaguar Land Rover Limited, Coventry, Warwickshire CV3 4LF (GB)
(72) Inventor: ARMSTRONG, Alan, Coventry Warwickshire CV3 4LF (GB)
(74) Representative: Jaguar Land Rover Patents Department
(86) International application number: PCT/EP2023/057330
(87) International publication number: WO 2023/180383

(56) References cited:
- DE-A1- 102011 055 495
- DE-A1- 102013 217 552
- DE-A1- 102017 208 505
- FR-A1- 3 034 389
- US-A1- 2018 319 402

## Description

### TECHNICAL FIELD

The present invention relates to a control system and method for interfacing with an automatable function of a vehicle. In particular, but not exclusively it relates to a control system, a vehicle, a method, and computer software.

### BACKGROUND

When a function of a vehicle is automatically activated, that is to say without the user deliberately initiating the interaction via some action (button press, voice comment...), the user may wish to modify the functions and/or the vehicle behaviour if the activation was not desired.

Conversely, if the machine-led interaction is less intrusive by first asking permission to perform an action, the user may question why the functions and/or the vehicle repeatedly asks for permission to perform the task even though the user always provides approval to act on the suggestion provided by the machine/technology.

DE 102013217552 A relates to driver assistance system (FAS) functions for vehicles. In particular, the document relates to the situation-dependent provision of FAS functions. A method for providing an ADAS function in a vehicle is described. The method includes determining a driving situation based on sensor data and determining a suitable FAS function for the driving situation. The method further includes detecting that the FAS function is not ready for use on the vehicle and determining that the FAS function should be set up for use on the vehicle. Furthermore, the procedure includes setting up the FAS function on the vehicle. The document discloses that if a driving situation is detected in which the specific driver has already activated a specific FAS function in the past, this FAS function can be activated automatically by the control unit (if necessary after prior confirmation by the specific driver via the input/output unit). FR 3034389 A1 relates to a method for automated management of the driving assistance modes of a motor vehicle comprising the following successive steps: checking the presence of the driver's hands on the steering wheel and that of his feet on the pedals; determining, in the event of the absence of hands on the steering wheel and/or feet on the pedals, the driving assistance mode(s) potentially activatable according to the driving context; and automatic activation of the driving assistance mode offering the highest level of delegation among those potentially activatable. US 2018/319402 A1 relates to a vehicle system comprising a display capable of displaying a message indicating automatic activation of a driver assistance feature; at least one electronic control unit configured to determine whether preset driving conditions are met; and a processor configured to cause the display to display the message upon receiving a notification indicating satisfaction of the conditions, initiate a countdown, and automatically activate the driver assistance feature upon completion of the countdown.

### SUMMARY OF THE INVENTION

It is an aim of the present invention to address one or more of the disadvantages associated with the prior art.

Aspects and embodiments of the invention provide a control system, a vehicle, a method, and computer software as claimed in the appended claims.

According to an aspect of the invention there is provided a control system for interfacing with an automatable function of a vehicle, the control system comprising one or more controllers, the control system configured to:
determine that an entry condition for automatic activation of the automatable function is satisfied;
determine which one of an opt-in message or an opt-out message will be presented to a user based on satisfaction of the entry condition, wherein the determination is dependent on user response history information based on one or more past user responses to one or more past opt-in messages and/or to one or more past opt-out messages;
cause presentation to the user of the message, wherein the message is the determined one of the opt-in message or the opt-out message; and
output a control signal to the automatable function, in dependence on whether the message is an opt-in message or an opt-out message,
wherein the determining which one of an opt-in message or an opt-out message will be presented comprises determining which one of the opt-in message or a first type of opt-out message or a second type of opt-out message will be presented,
wherein the first type of opt-out message is a notifying message to notify the user of upcoming vehicle-initiated activation of the automatable function and enabling the user to intervene to prevent the upcoming vehicle-initiated activation, and
wherein the second type of opt-out message is a feedback message to inform the user that vehicle-initiation of the automatable function has occurred.

An advantage is minimising complication whilst the vehicle, by automatically increasing or decreasing the level of user interaction required to activate a function when conditions are suitable for automatic activation of the function. A proactive vehicle-initiated activation model adapts over time based on the response of the user to previous suggestions or vehicle-initiated activations. This adapts the degree of intrusiveness and method by which the vehicle-initiated activation is delivered with a suitable level of understanding of the user.

In some examples, the opt-in message is a suggestion message to suggest user-initiated activation of the automatable function.

According to the invention, the determining which one of an opt-in message or an opt-out message will be presented comprises determining which one of the opt-in message or a first type of opt-out message or a second type of opt-out message will be presented,
wherein the first type of opt-out message is a notifying message to notify the user of upcoming vehicle-initiated activation of the automatable function and enabling the user to intervene to prevent the upcoming vehicle-initiated activation, and
wherein the second type of opt-out message is a feedback message to inform the user that vehicle-initiation of the automatable function has occurred.

In some examples, the one or more past opt-in messages and/or the one or more past opt-out messages are associated with the automatable function.

In some examples, the control system is configured to update the user response history information based on a determined user response to the presented message.

In some examples, if the determined user response comprises acceptance of a presented opt-in message, the control system is configured to update the user response history information towards enabling future messages to be opt-out messages.

In some examples, if the determined user response comprises ignoring of a presented opt-out message, the control system is configured to update the user response history information towards enabling future messages to be opt-out messages.

In some examples, if the determined user response comprises intervention in response to a presented opt-out message, to prevent or reverse automatic activation of the automatable function, the control system is configured to update the user response history information towards requiring future messages to be opt-in messages. In some examples, determining the that the user has intervened to prevent or reverse the automatic activation of the automatable function is dependent on a determined time delay between the presentation of the opt-out message and detection of the intervention.

In some examples, if the determined user response comprises a user dismissal input of the presented message, the control system is configured to update the user response history information towards a no-intrusion state in which no message is presented when the entry condition for automatic activation of the automatable function is satisfied in future.

In some examples, the automatable function comprises one of: an HVAC (heating-ventilation and cooling) function of the vehicle; a seat comfort function; a communication event notification function; or an ADAS (advanced driver assistance system) function.

In some examples, the control system is configured to: determine an identity associated with the user or a user device; and using the identity, obtain the user response history information. An advantage is enabling the model to anticipate the user response more accurately.

In some examples, causing presentation of the message comprises controlling a display to render the message.

According to a further aspect of the invention there is provided a vehicle comprising the control system.

According to a further aspect of the invention there is provided a method of interfacing with an automatable function of a vehicle, the method comprising:
determining that an entry condition for automatic activation of the automatable function is satisfied;
determining which one of an opt-in message or an opt-out message will be presented to a user based on satisfaction of the entry condition, wherein the determination is dependent on user response history information based on one or more past user responses to one or more past opt-in messages and/or to one or more past opt-out messages;
causing presentation to the user of the message, wherein the message is the determined one of the opt-in message or the opt-out message; and
outputting a control signal to the automatable function, in dependence on whether the message is an opt-in message or an opt-out message,
wherein the determining which one of an opt-in message or an opt-out message will be presented comprises determining which one of the opt-in message or a first type of opt-out message or a second type of opt-out message will be presented,
wherein the first type of opt-out message is a notifying message to notify the user of upcoming vehicle-initiated activation of the automatable function and enabling the user to intervene to prevent the upcoming vehicle-initiated activation, and
wherein the second type of opt-out message is a feedback message to inform the user that vehicle-initiation of the automatable function has occurred.

According to a further aspect of the invention there is provided computer software that, when executed, is arranged to perform any one or more of the methods described herein. According to a further aspect of the invention there is provided a non-transitory computer readable medium comprising computer readable instructions that, when executed by a processor, cause performance of any one or more of the methods described herein.

Within the scope of this application it is expressly intended that the various aspects, embodiments, examples and alternatives set out in the preceding paragraphs, in the claims and/or in the following description and drawings, and in particular the individual features thereof, may be taken independently or in any combination that falls within the scope of the appended claims. That is, all embodiments and/or features of any embodiment can be combined in any way and/or combination that falls within the scope of the appended claims, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
FIG. 1 illustrates an example of a vehicle;
FIG. 2 illustrates an example of a control system;
FIG. 3 illustrates an example of a non-transitory computer-readable storage medium; and
FIG. 4 illustrates an example of a method.

### DETAILED DESCRIPTION

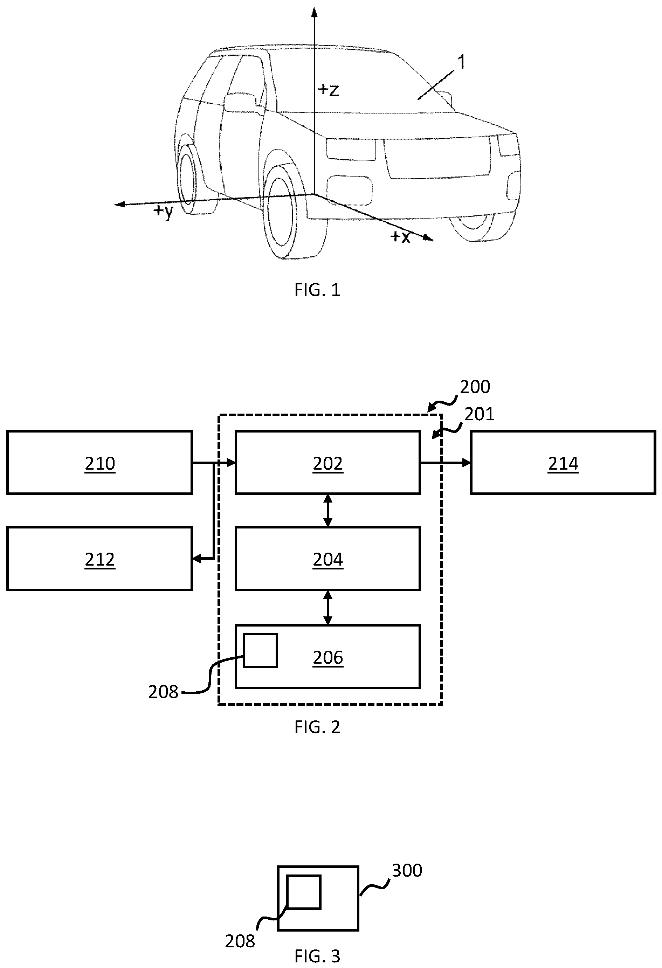

FIG. 1 illustrates an example of a vehicle 1 in which embodiments of the invention can be implemented. In some, but not necessarily all examples, the vehicle 1 is a passenger vehicle, also referred to as a passenger car or as an automobile. In other examples, embodiments of the invention can be implemented for other applications, such as commercial vehicles.

FIG. 1 is a front perspective view and illustrates a longitudinal x-axis between the front and rear of the vehicle 1 representing a centreline, an orthogonal lateral y-axis between left and right lateral sides of the vehicle 1, and a vertical z-axis. A forward/fore direction typically faced by a driver's seat is in the positive x-direction; rearward/aft is -x. A rightward direction as seen from the driver's seat is in the positive y-direction; leftward is -y. These are a first lateral direction and a second lateral direction.

FIG. 2 illustrates an example control system 200 configured to implement one or more aspects of the invention. The control system 200 of FIG. 2 comprises a controller 201. In other examples, the control system 200 may comprise a plurality of controllers on-board and/or off-board the vehicle 1.

The controller 201 of FIG. 2 includes at least one processor 204; and at least one memory device 206 electrically coupled to the electronic processor 204 and having instructions (e.g. a computer program 208) stored therein, the at least one memory device 206 and the instructions configured to, with the at least one processor 204, cause any one or more of the methods described herein to be performed. The processor 204 may have an interface 202 such as an electrical input/output I/O or electrical input for receiving information and interacting with external components. FIG. 3 illustrates a non-transitory computer-readable storage medium 300 comprising the instructions 208 (computer software).

The external components in FIG. 2 include, for example, a human-machine interface (HMI 210), sensors 212, and an automatable function 214 (automatable component) of the vehicle 1. In at least some examples, the control system 200 can activate the automatable function 214 either manually in response to an HMI input, or automatically (vehicle-initiated, without user intervention) in dependence on input from the sensors 212.

Examples of HMI 210 include any one or more of the following input devices and any one or more of the following output devices:
- Input devices: tactile sensor; touchscreen sensor; voice sensor (e.g., microphone); gesture sensor (e.g., imaging sensor).
- Output devices: display; loudspeaker; haptic sensor.

Note that the invention is not directed to automation per se. Therefore, although shown in FIG. 2, it is not essential for the control system 200 to be directly responsible for receiving sensory input and automatically activating the automatable function 214 - this could be the responsibility of a separate, lower level controller.

Example automatable functions are described below to provide example use cases. However, the invention can be applied to different automatable functions than the non-exhaustive examples below.

A first example of an automatable function 214 is an HVAC (heating-ventilation and cooling) function. An example of an HVAC function is a climate control function.

A first example of a climate control function is a recirculation actuator. In a first, activated configuration, the recirculation actuator directs HVAC air captured from the cabin back into the cabin. In a second, non-activated configuration, the recirculation actuator directs fresh HVAC air into the cabin. The HMI that controls the recirculation function comprises a tactile control or touchscreen control, for example. Assuming the vehicle lacks an air quality sensor, the sensor 212 that enables automatic activation of the recirculation actuator may comprise a localisation sensor configured to localise the vehicle 1 within an electronic map (e.g., high-definition map) to indicate whether the vehicle is in or approaching an environment where low air quality may be expected. The localisation sensor can comprise at least one of: a Global Positioning System (GPS) sensor; a camera sensor; a radar sensor; or a lidar sensor. In a use case, the control system 200 determines that an entry condition for automatic activation of the recirculation function is satisfied, in dependence on the localisation sensor indicating that the vehicle 1 is in an urban environment and/or an enclosed space (e.g., tunnel). In response to the satisfaction, the control system 200 can automatically activate the recirculation actuator and optionally can automatically close one or more windows of the vehicle 1. Additionally, or alternatively, an air quality sensor could be used.

A second example of a climate control function is an air conditioning actuator for activating air conditioning (vapour-compression refrigeration cycle). The HMI that activates and deactivates the air conditioning function comprises at least one tactile control or touchscreen control, for example. The sensor 212 that enables automatic activation of the air conditioning function can comprise at least one of a temperature sensor or a humidity sensor, for example. In a use case, the control system 200 determines that an entry condition for automatic activation of the air conditioning function is satisfied, in dependence on the temperature and/or humidity. In response to the satisfaction, the control system 200 can automatically activate the air conditioning function if permitted by the user.

A second example of an automatable function 214 is a seat comfort function for a seat of the vehicle 1. A first example of a seat comfort function is a seat massage function. A second example of a seat comfort function is a seat ventilation function.

An example of a seat massage function is a seat massage actuator. The HMI that activates and deactivates the seat massage function comprises at least one tactile control or touchscreen control, for example. The sensor 212 that enables, at least in part, automatic activation of the seat massage function can comprise a seat occupancy sensor (e.g., seatbelt sensor, seat weight sensor), for example. In a use case, the control system 200 determines that an entry condition for automatic activation of the seat massage function is satisfied, in dependence on the seat occupancy sensor indicating that the seat is occupied, and in dependence on previous usage patterns of the seat massage function (e.g., time, day of week, location, time since start of journey). In response to the satisfaction, the control system 200 can automatically activate the seat massage function if permitted by the user.

An example of a seat ventilation function is a seat ventilation actuator for enabling heating and/or cooling the seat. The HMI that activates and deactivates the seat ventilation function comprises at least one tactile control or touchscreen control, for example. The sensor 212 that enables, at least in part, automatic activation of the seat ventilation function can comprise a temperature sensor and/or a seat occupancy sensor (e.g., seatbelt sensor, seat weight sensor), for example. In a use case, the control system 200 determines that an entry condition for automatic activation of the seat ventilation function is satisfied, in dependence on the seat occupancy sensor indicating that the seat is occupied, and in dependence on the temperature sensor indicating that heating or cooling is needed, and in dependence on previous usage patterns of the seat ventilation function. In response to the satisfaction, the control system 200 can automatically activate the seat ventilation function if permitted by the user.

A third example of an automatable function 214 is a communication event notification function. An example of a communication event notification function is an automatic message reading configuration. When activated, the automatic message reading configuration is configured to automatically control a loudspeaker of the vehicle 1 to 'read' the content of a received message to the user, in response to receipt of the message via a cellular network or any other communication network. The message can comprise an SMS or other user communication format, or can comprise a software application notification. When not activated, the message is not automatically read to the user. The HMI that activates and deactivates the automatic message reading configuration comprises at least one tactile control or touchscreen control, for example. The sensor 212 that enables, at least in part, automatic activation of the automatic message reading configuration can comprise an interface (e.g., wireless interface such as Bluetooth TM, or wired interface) for automatically establishing a connection between the user's personal device (e.g., cellular Mobile Equipment, ME) and the HMI of the vehicle 1. In a use case, the control system 200 determines that an entry condition for automatic activation of the communication event notification function is satisfied, in dependence on the interface establishing a connection to the personal device of the user. In response to the satisfaction, the control system 200 can automatically activate the communication event notification function if permitted by the user.

A fourth example of an automatable function 214 is an Advanced Driver Assistance System (ADAS) function. An example of an ADAS function is a driving automation function. The driving automation function can comprise cruise control or an autonomous driving function. When activated, the driving automation function is configured to control one or more longitudinal actuators of the vehicle 1, such as a powertrain and brakes, to autonomously implement longitudinal vehicle control. Depending on the function, a lateral actuator such as an autonomous steering system may also be controlled to autonomously implement lateral vehicle control. When not activated, the vehicle 1 is under manual control. The HMI that activates and deactivates the driving automation function comprises at least one tactile control or touchscreen control, for example. The sensor 212 that enables, at least in part, automatic activation of the driving automation function can comprise a localisation sensor as described above. In a use case, the control system 200 determines that an entry condition for automatic activation of the autonomous driving function is satisfied, in dependence on the localisation sensor indicating that the vehicle 1 is in a cruising environment (e.g., driving along a multi-lane highway), and perhaps in dependence on other factors such as whether a speed sensor indicates that the vehicle 1 is in a cruising state (e.g., as indicated by speed statistics). In response to the satisfaction, the control system 200 can automatically activate the driving automation function if permitted by the user.

A fifth example of an automatable function 214 is a service booking function. When activated, the service booking function is configured not only to cause the HMI to prompt the user to book a vehicle service, but is also configured to automatically cause the HMI to render a service booking user interface (e.g., via a touchscreen display) that enables the user to book a service. When not activated, the service booking user interface is not automatically rendered to the user. The HMI that activates and deactivates the service booking function comprises at least one tactile control or touchscreen control, for example. The sensor 212 that enables, at least in part, automatic activation of the service booking function can comprise a diagnostic sensor (e.g., time/mileage/fault code sensor), for indicating a servicing requirement. In a use case, the control system 200 determines that an entry condition for automatic activation of the service booking is satisfied, in dependence on the diagnostic sensor indicating a requirement to service the vehicle 1. In response to the satisfaction, the control system 200 can automatically activate the service booking function if permitted by the user.

In the above examples, the user has a choice whether to manually initiate the automatable function 214 or enable automatic (vehicle-initiated) activation of the automatable function 214. If the automatable function 214 interacts with the user proactively, that is to say without the user initiating the automatable function 214 via some action (button press, voice comment...), the vehicle-initiated activation can seem overly intrusive or even aggressive if this is not what the user wanted. On the other hand, the user may not discover useful functions of the vehicle 1 if they neither manually activate the function nor enable automatic activation of functions.

If the vehicle-initiated activation occurs without first asking permission from the user, the perception of the user is a loss of control and loss of confidence in the proactive technology initiating the automatable function, especially when the interaction is experienced for the first time.

Conversely, if a user is comfortable with a method of vehicle-initiated activation that is less intrusive by asking permission to perform an action, the user may become irritated by always being asked for permission for the control system 200 to perform the activation even though the user always provides approval to act on the suggestion provided by the control system 200.

Aspects of this disclosure provide a solution, comprising a proactive vehicle-initiated activation model which adapts over time based on the response of the user to previous suggestions or vehicle-initiated activations. This adapts the degree of intrusiveness and method by which the vehicle-initiated activation is delivered with a suitable level of understanding of the user.

The model is based on a plurality of states which govern the degree of intrusion when the entry condition for activating the automatable function 214 is satisfied. Initially the intrusion level would be low, such that the control system 200 'SUGGESTS' activating the automatable function 214 to the user: for example, "a tunnel is coming up, perhaps I should close the windows and activate air re-circulation?" This is an opt-in message which the user needs to accept, for example by making a touchscreen input of an acceptance control within the displayed opt-in message, or by actuating the HMI control assigned to activating the automatable function 214, or by providing a voice or gesture confirmation to carry out the suggestion.

If the user accepts the suggestion one or more times, then the intrusion level increases for future similar events, such that the control system 200 'NOTIFIES' the user an operation will be performed: for example, "a tunnel is coming up, so I will close the windows and activate air re-circulation soon unless you say no". This is an opt-out message that requires user intervention to prevent the automatic activation of the automatable function 214, if the activation is not desired. The user intervention can comprise making a touchscreen input of an intervention control within the displayed opt-out message, or providing a voice or gesture confirmation to carry out the suggestion.

If the user ignores the opt-out notification, then the intrusion level increases for future similar events, such that the control system 200 automatically initiates the automatic activation without advising the user beforehand, and then 'INFORMS' the user that the automatable function 214 has been activated: for example, "a tunnel is coming up, so I've closed the windows and activated air re-circulation". This is a second type of opt-out message that requires user intervention to deactivate the already-automatically-activated automatable function 214, if the activation was not desired. The user intervention can comprise making a touchscreen input of an intervention control within the displayed second type of opt-out message, or by actuating the HMI control assigned to deactivating the automatable function 214.

The intrusion level may decrease from INFORM to NOTIFY, for example if the control system 200 detects the user intervention to reverse the automatic activation. The intrusion level may decrease from NOTIFY to SUGGEST, for example if the control system 200 detects the user intervention to prevent the automatic activation.

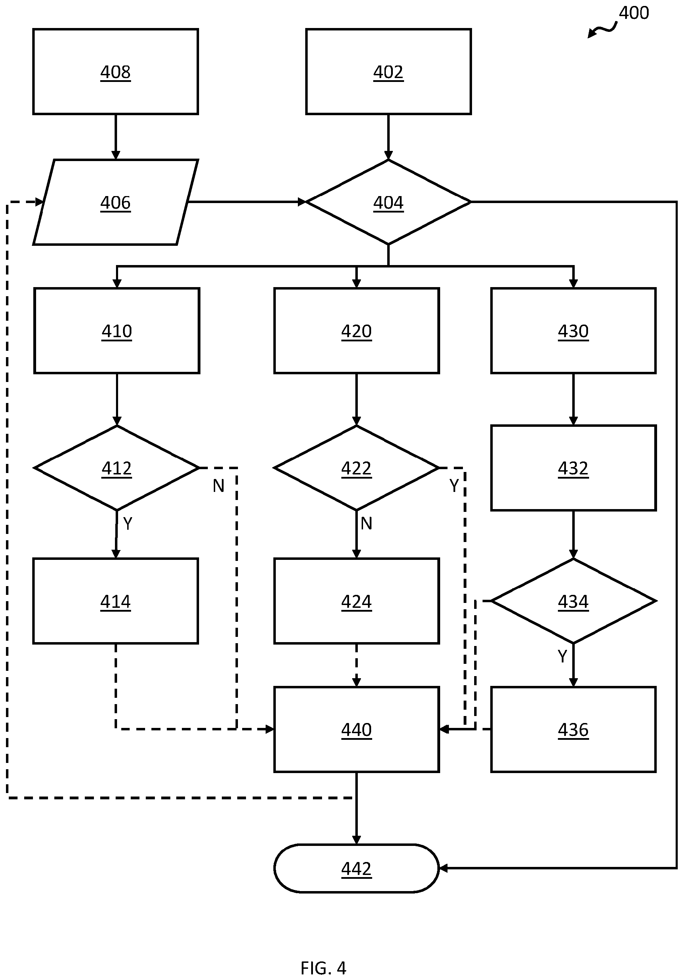

FIG. 4 illustrates an example method 400 for implementing the model. The method 400 is computer-implemented, and may be executed by the control system 200.

Block 402 of the method 400 comprises determining that an entry condition for automatic activation of the automatable function 214 is satisfied. The example entry conditions are as already described above.

Block 404 of the method 400 is an intrusion level decision block configured to determine which one of an opt-in message or a first type of opt-out message or a second type of opt-out message will be presented to a user. Although FIG. 4 shows two types of opt-out message, it would be appreciated that in other embodiments, there may be only one type of opt-out message, and/or more than two types of opt-out message, and/or more than one type of opt-in message.

The message is based on satisfaction of the entry condition in block 402 and relates to the automatable function 214. The opt-in message is the 'SUGGEST' message as described above. The first type of opt-out message is the 'NOTIFY' message as described above. The second type of opt-out message is the 'INFORM' message as described above.

Optionally, the decision block 404 has the further option to determine not to render any message to the user, and proceeds straight to termination block 442. This is a 'no-intrusion' mode of operation in which the automatable function 214 is not performed and no message is rendered.

As described above, the decision is dependent on the user's previous actions (accept, ignore, intervene) in response to one or more past renderings of an opt-in message, of an opt-out message of the first type, and/or of an opt-out message of the second type.

This is represented in FIG. 4 by the data block 406, connected to the decision block 404. In an example implementation, the data block 406 may comprise a state machine, a statistical metric, or a database, parameterising the user's previous actions. The data block 406 therefore parameterises user response history information of the user (accept, ignore, intervene).

In an example implementation, the user response history information may be parameterised by a state machine. The state machine comprises a first state indicating that the opt-in message should be output, a second state indicating that the first type of opt-out message should be output, and a third state indicating that the second type of opt-out message should be output.

As shown in the later feedback loop of FIG. 4, the data block 406 may be updated in dependence on detection a new action (accept, ignore, intervene) in response to the message currently determined by decision block 404.

An update such as a state change may require a threshold number of repetitions of the new action, or may change if the new action is performed only once. The threshold affects the stickiness of each state. Different states may have different thresholds. Increasing the intrusion level may require a higher threshold than decreasing the intrusion level. The threshold may increase each time the action is associated with that state - in other words, the state may become stickier with time.

Optionally, the intrusion level can descend from opt-in messages to no messages at all, if the user response history information indicates that the user repeatedly does not accept opt-in messages. The user response history information may comprise a further, 'no intrusion' state for this purpose. If no message is to be rendered, the method 400 may terminate.

Optionally, the intrusion level may increase from 'no intrusion' to 'opt-in' following a period of time if a threshold is reached such that the control system has a higher level of confidence that the predicted automation is desired by the user OR after a significant period of time as the user may have changes their attitude towards the automation of the function that they previously rejected.

The user response history information may be specific to the same automatable function 214 currently determined by blocks 402-404. Therefore, if this method 400 is implemented for a plurality of different automatable functions, then a different type of message (opt-in or opt-out) can be rendered for each automatable function 214 depending on the user's function-specific responses.

Alternatively, the user response history information may be 'global', and agnostic to which one of a plurality of automatable functions the previous actions related to. Therefore, the action which the user takes in response to a message associated with one automatable function will affect the future type of message associated with not only that automatable function but will also affect the future type of message associated with the other automatable functions.

In a further embodiment, the decision block 404 may be dependent on both function-specific and global user response history information.

Further, the user response history information may be either identity-specific or agnostic to who the user is. FIG. 4 illustrates an identity block 408 connected to the data block 406. The identity block 408 determines an identity associated with the user, or alternatively an identity associated with a user device (e.g., key or mobile equipment). Techniques for reliably detecting the user include facial feature recognition (via imaging sensor) or detecting a cellular Mobile Equipment of the user upon connection establishment between the cellular Mobile Equipment and the vehicle HMI.

The identity may be determined at the start of a drive cycle, as the user unlocks and/or enters the vehicle 1. The determined identity may be implemented as a 'user profile', or a user's (connected) account obtained from their personal device, for example. The user profile is for storing one or more settings and/or one or more preferences, associated with one or more functions of the vehicle 1.

The data block 406 may comprise user response history data associated with each user profile and/or connected account of the vehicle 1. The decision block 404 can therefore obtain user response history data associated with the determined identity/user profile.

In some examples, the user response history information depends on a number of detected occupants in the vehicle 1. The number of detected occupants can be detected via one or more of a seatbelt sensor, a door ajar sensor, a seat weight sensor, a cabin-facing imaging sensor, and/or the like. The number of detected occupants can affect the determination of the decision block 404. A different type of message may therefore be selected by the decision block 404 depending on the number of occupants. This is useful because sometimes a user can be more or less dismissive depending on whether there is someone in the vehicle 1 with them.

Once the decision block 404 has determined the intrusion level/type of message, the method 400 proceeds to block 410 if the intrusion level is low/the message is an opt-in message ('SUGGEST'), or to block 420 if the intrusion level is higher/the message is the first type of opt-out message ('NOTIFY'), or to block 430 if the intrusion level is highest/the message is the second type of opt-out message ('INFORM').

Optionally, the method 400 may first determine whether it is appropriate to cause presentation of the message, either opt-in or opt-out, based on the state of the user and/or the vehicle. This could be checked in closed loop using a technology such as a camera, microphone, or ECG (electrocardiogram), to measure the user directly. In some examples, this could be checked in open loop using some pre-defined rules such as 'do not initiate interactions with the user until 60 sec into the journey or until within 300m of a stopping location (junction / traffic-lights)'.

Blocks 410-414 define a subroutine associated with a low intrusion level ('SUGGEST'). At block 410, the method 400 comprises causing presentation to the user of the determined opt-in message, wherein the opt-in message is a suggestion message to suggest user-initiated activation of the automatable function 214. In an example use case, the message indicates "There is an area of low air quality ahead, I suggest activation of air-recirculation".

The suggestion message may be rendered by any appropriate HMI such as a display of the vehicle 1, by a loudspeaker in the vehicle 1, or even by a remote output device such as a display of Mobile Equipment of the user.

At decision block 412, the method 400 comprises determining whether the user has accepted the suggestion message of block 410.

Determining that the user has accepted the suggestion message may comprise detecting a user touchscreen input of an acceptance control ('ACCEPT') associated with the rendered opt-in message, or may comprise detecting an acceptance voice command (e.g., 'YES' or 'OK') via a microphone, or may comprise detecting user actuation of the separate HMI control permanently/normally assigned to activating the automatable function 214. Once the acceptance has been determined, the method 400 may progress to block 414 and the suggestion message may stop being rendered.

The suggestion message may be rendered for a predetermined time, such as a time selected from the range five seconds to five minutes. Additionally, or alternatively, continued rendering of the suggestion message may require the entry condition of block 402 for automatic activation of the automatable function 214 to remain satisfied. If the entry condition is no longer satisfied, the suggestion message may stop being rendered.

Determining that the user has not accepted the suggestion message may comprise determining that the user has ignored the suggestion message. For example, if no acceptance is detected before expiry of a timer such as the predetermined time for which the suggestion message is displayed, the method 400 may determine this as the message being ignored.

Ignoring the suggestion message a threshold number of times (at each runtime of the method 400) may cause or enable a transition to the 'no intrusion' state in which no message is rendered a in future execution of the method 400.

Optionally, the suggestion message can comprise a message dismissal control (e.g., 'NOT NOW' or 'DISMISS') which dismisses (e.g., stops rendering of) the suggestion message instead of waiting for timer expiry. This has the benefit of providing an extra dimension of user response history information to improve the model such that adaptation to the user's preference is faster and more accurate. Dismissals can be treated differently than ignoring the message. For example, dismissals can unlock a transition to the 'no intrusion' state, or expedite the transition (relative to ignoring suggestion messages).

Block 414 comprises outputting a control signal to the automatable function 214, if decision block 412 determined that the user response comprised acceptance of the suggestion message.

Outputting the control signal may comprise outputting an activation signal to cause the activation of the automatable function 214. Alternatively, outputting the control signal can comprise changing the state of a software flag that controls the ability of an external controller to automatically activate of the automatable function 214.

Following decision block 414, the method 400 proceeds to block 440 which updates the user response update history to depend on the outcome of decision block 412 (did the user accept, ignore or dismiss the suggestion message?). This may affect the state/type of message at the next runtime of the method 400, for the reasons described earlier. It would be appreciated that block 440 could be performed straight after block 412, without waiting for block 414.

If the determined user response comprised acceptance of the presented suggestion message, the method 400 is configured to update the user response history information towards enabling future messages (either globally, or only messages associated with the specific automatable function 214) to be opt-out messages. This can be achieved via states/thresholds as described earlier. If accepted enough times, the next runtime may perform the opt-out subroutine 420-424.

Further, if the determined user response comprises ignoring of the presented suggestion message, the control system 200 is configured to update the user response history information towards requiring future messages (either globally, or only messages associated with the specific automatable function 214) to be opt-in (suggestion) messages, or may even descend to the 'no intrusion' state.

Blocks 420-424 define a subroutine associated with the medium intrusion level ('NOTIFY'). At block 420, the method 400 comprises causing presentation to the user of the first type of opt-out message, wherein the opt-out message is the notifying message to indicate to the user that vehicle-initiated activation of the automatable function 214 is upcoming. The notifying message enables the user to intervene to prevent the upcoming vehicle-initiated activation. In an example use case, the message indicates "There is an area of low air quality ahead, I will activate air recirculation. Please say NO if you don't want air-recirculation activated."

The notifying message may be rendered by any appropriate HMI such as a display of the vehicle 1, by a loudspeaker in the vehicle 1, or even by a remote output device such as a display of Mobile Equipment of the user. The notifying message is rendered before the automatable function 214 is activated automatically.

At decision block 422, the method 400 comprises determining whether the user has intervened in response to the opt-out message, to prevent automatic activation of the automatable function 214.

Determining that the user has intervened to prevent the automatic activation of the automatable function 214 may comprise detecting a user touchscreen input of an intervention control ('DO NOT ACTIVATE') associated with the rendered notifying message, or may comprise detecting an intervention voice command (e.g., 'NO') via a microphone. Once the intervention has been determined, the notifying message may stop being rendered and the method 400 may progress to block 440 without enabling the automatic activation. On the other hand, if the user ignores the notifying message, the method 400 progresses to block 424 to enable the automatic activation.

The notifying message may be rendered for a predetermined time, such as a time selected from the range five seconds to five minutes. Additionally, or alternatively, the notifying message may continue to be rendered only if the entry condition of block 402 for automatic activation of the automatable function 214 remains satisfied. If the entry condition is no longer satisfied, the notifying message may stop being rendered.

Determining that the user has ignored the notifying message may comprise determining that the user has not intervened in the manner described above. For example, if no intervention is detected before the automatic activation, or before expiry of a timer such as the predetermined time for which the notifying message is displayed, the method 400 may determine this as the notifying message being ignored.

Optionally, the notifying message can comprise a message dismissal control as described earlier in relation to the suggestion message.

Block 424 comprises outputting a control signal to the automatable function 214, if decision block 422 determined that the user did not intervene/ignored the notifying message.

Outputting the control signal may comprise outputting an activation signal to cause the activation of the automatable function 214. Alternatively, outputting the control signal can comprise changing the state of a software flag that enables an external controller to automatically activate of the automatable function 214.

Upon execution of block 424, the notifying message may cease being rendered, or alternatively may be updated to or replaced by a feedback message ('INFORM') as described later, to indicate that the automatable function 214 has activated.

Following decision block 424, the method 400 proceeds to block 440 which updates the user response history information to depend on the outcome of decision block 412 (did the user ignore or intervene, or dismiss the notifying message?). This may affect the state/type of message at the next runtime of the method 400, for the reasons described earlier. It would be appreciated that block 440 could be performed straight after block 422, without waiting for block 424.

If the determined user response comprised intervention in response to the presented notifying message, to prevent activation of the automatable function 214, the method 400 is configured to update the user response history information towards requiring future messages (either globally, or only messages associated with the specific automatable function 214) to be opt-in messages (suggestion messages). This can be achieved via states/thresholds as described earlier. If intervened enough times, the next runtime may perform the opt-in subroutine 410-414 instead of 420-424.

Further, if the determined user response comprises ignoring of the presented notifying message, the control system 200 is configured to update the user response history information towards enabling future messages (either globally, or only messages associated with the specific automatable function 214) to be the second type of opt-out message (feedback message). If ignored enough times, the next runtime may perform the feedback message subroutine 430-436 instead of 420-424.

Blocks 430-436 define a subroutine associated with the high intrusion level ('INFORM'). At block 430, the method 400 comprises outputting a control signal to the automatable function 214, before presenting the message, if the message is the second type of opt-out message ('inform').

Outputting the control signal may comprise outputting an activation signal to cause the activation of the automatable function 214. Alternatively, outputting the control signal can comprise changing the state of a software flag that controls the ability of an external controller to automatically activate of the automatable function 214.

Upon or after execution of block 430, the method 400 proceeds to block 432 which comprises causing presentation to the user of the second type of opt-out message, wherein the opt-out message is the feedback message to indicate to the user that vehicle-initiated activation of the automatable function 214 has occurred. In an example use case, the message indicates "Air-recirculation has been activated on approach to an area of low air quality".

The method 400 may initiate rendering of the feedback message concurrently with automatic activation of the automatable function 214. By rendering the feedback message at the same time as function activation, this provides the user with a visual and/or audio cue to show that the activation was intentional and vehicle-initiated.

The feedback message may be rendered by any appropriate HMI such as a display of the vehicle 1, by a loudspeaker in the vehicle 1, or even by a remote output device such as a display of Mobile Equipment of the user.

At decision block 434, the method 400 comprises determining whether the user has intervened in response to the feedback message, to reverse the automatic (vehicle-initiated) activation of the automatable function 214.

Determining that the user has intervened to reverse the automatic activation of the automatable function 214 may comprise detecting a user touchscreen input of an intervention control ('DISABLE' or 'UNDO') associated with the rendered feedback message, or may comprise detecting an intervention voice command (e.g., 'UNDO') via a microphone, or may comprise detecting user actuation of the separate HMI control permanently/normally assigned to deactivating the automatable function 214. Once the intervention has been determined, the feedback message may stop being rendered and the method 400 may progress to block 436 to output a second control signal to disable the automatable function 214, or change the software flag to its previous state, as the case may be. The control system may also determine to decrease the intrusion level, for example, to 'NOTIFY' or 'SUGGEST'. On the other hand, if the user ignores the feedback message, the method 400 progresses to block 440 without deactivating the automatable function 214.

To avoid misinterpreting the user's intentions, determining that the user has intervened to reverse the automatic activation of the automatable function 214 may be dependent on a determined time delay between the presentation of the opt-out message and detection of an input that could be interpreted as an intervention. This input may comprise user actuation of the HMI control permanently/normally assigned to deactivating the automatable function 214. For example, if the input occurs within a time limit from the rendering of the message, the method 400 may determine it to be an intervention (the user disagreeing with the decision to automatically activate the automatable function 214). However, if the input occurs later than the time limit, the method 400 may determine it to be not an intervention - the input may not express dissatisfaction with the original decision to automatically activate the automatable function 214, because the user may simply no longer require the benefit provided by the automatable function 214. The specific time limit is implementation dependent, depending on the type of automatable function 214.

The feedback message may be rendered for a predetermined time, such as the time limit described above or a shorter timeout. The timeout may be selected from the range five seconds to five minutes. Additionally, or alternatively, continued rendering of the feedback message may require the entry condition of block 402 for automatic activation of the automatable function 214 to remain satisfied. If the entry condition is no longer satisfied, the feedback message may stop being rendered.

Determining that the user has ignored the feedback message may comprise determining that the user has not intervened in the manner described above. For example, if no intervention is detected before expiry of the time limit described above a timer such as the time limit described above, the user response history information may receive this as the feedback message being ignored.

Optionally, the feedback message can comprise a message dismissal control as described earlier in relation to the suggestion/notifying message.

Following decision block 434, the method 400 proceeds to block 440 which updates the user response history information to depend on the outcome of decision block 434 (did the user ignore or intervene, or dismiss the feedback message?). This may affect the state/type of message at the next runtime of the method 400, for the reasons described earlier. It would be appreciated that block 440 could be performed straight after block 434, without waiting for block 436.

If the determined user response comprised intervention in response to the presented feedback message, to reverse automatic activation of the automatable function 214, the method 400 is configured to update the user response history information towards requiring future messages (either globally, or only messages associated with the specific automatable function 214) to be opt-in messages (suggestion messages). This can be achieved via states/thresholds as described earlier. If intervened enough times, the next runtime may perform the subroutine 424-424 to require notifying messages, instead of 430-436.

Further, if the determined user response comprises ignoring of the presented feedback message, the control system 200 is configured to update the user response history information towards enabling future messages (either globally, or only messages associated with the specific automatable function 214) to continue to be opt-out (feedback) messages.

For purposes of this disclosure, it is to be understood that the controller(s) described herein can each comprise a control unit or computational device having one or more electronic processors. A vehicle and/or a system thereof may comprise a single control unit or electronic controller or alternatively different functions of the controller(s) may be embodied in, or hosted in, different control units or controllers. A set of instructions could be provided which, when executed, cause said controller(s) or control unit(s) to implement the control techniques described herein (including the described method(s)). The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on one or more electronic processors, optionally the same one or more processors as the first controller. It will be appreciated, however, that other arrangements are also useful, and therefore, the present disclosure is not intended to be limited to any particular arrangement. In any event, the set of instructions described above may be embedded in a computer-readable storage medium (e.g., a non-transitory computer-readable storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

It will be appreciated that various changes and modifications can be made to the present invention without departing from the scope of the present application.

The blocks illustrated in FIG. 4 may represent steps in a method and/or sections of code in the computer program 208. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. A control system (200) for interfacing with an automatable function (214) of a vehicle, the control system comprising one or more controllers (201), the control system configured to:
determine (402) that an entry condition for automatic activation of the automatable function is satisfied;
determine (404) which one of an opt-in message or an opt-out message will be presented to a user based on satisfaction of the entry condition, wherein the determination is dependent on user response history information (406) based on one or more past user responses to one or more past opt-in messages and/or to one or more past opt-out messages;
cause presentation (410, 420, 432) to the user of the message, wherein the message is the determined one of the opt-in message or the opt-out message; and
output (414, 424, 430) a control signal to the automatable function, in dependence on whether the message is an opt-in message or an opt-out message,
wherein the determining which one of an opt-in message or an opt-out message will be presented comprises determining (404) which one of the opt-in message or a first type of opt-out message or a second type of opt-out message will be presented,
wherein the first type of opt-out message is a notifying message to notify the user of upcoming vehicle-initiated activation of the automatable function and enabling the user to intervene to prevent the upcoming vehicle-initiated activation, and
wherein the second type of opt-out message is a feedback message to inform the user that vehicle-initiation of the automatable function has occurred.

2. The control system of claim 1, wherein the opt-in message is a suggestion message to suggest user-initiated activation of the automatable function.

3. The control system of any preceding claim, wherein the one or more past opt-in messages and/or the one or more past opt-out messages are associated with the automatable function.

4. The control system of any preceding claim, configured to update (440) the user response history information based on a determined user response (412, 422, 434) to the presented message.

5. The control system of claim 3, wherein if the determined user response comprises acceptance of a presented opt-in message, the control system is configured to update the user response history information towards enabling future messages to be opt-out messages.

6. The control system of claim 4 or 5, wherein if the determined user response comprises ignoring of a presented opt-out message, the control system is configured to update the user response history information towards enabling future messages to be opt-out messages.

7. The control system of claim 4, 5 or 6, wherein if the determined user response comprises intervention in response to a presented opt-out message, to prevent or reverse automatic activation of the automatable function, the control system is configured to update the user response history information towards requiring future messages to be opt-in messages.

8. The control system of claim 7, wherein determining the that the user has intervened to prevent or reverse the automatic activation of the automatable function is dependent on a determined time delay between the presentation of the opt-out message and detection of the intervention.

9. The control system of any preceding claim, wherein the automatable function comprises one of: an HVAC, heating-ventilation and cooling, function of the vehicle; a seat comfort function; a communication event notification function; or an ADAS, advanced driver assistance system, function.

10. The control system of any preceding claim, configured to: determine an identity (408) associated with the user or a user device; and using the identity, obtain the user response history information.

11. A vehicle (1) comprising the control system (200) of any one of the preceding claims.

12. A method (400) of interfacing with an automatable function of a vehicle, the method comprising:
determining (402) that an entry condition for automatic activation of the automatable function is satisfied;
determining (404) which one of an opt-in message or an opt-out message will be presented to a user based on satisfaction of the entry condition, wherein the determination is dependent on user response history information (406) based on one or more past user responses to one or more past opt-in messages and/or to one or more past opt-out messages;
causing presentation (410, 420, 432) to the user of the message, wherein the message is the determined one of the opt-in message or the opt-out message; and
outputting (414, 424, 430) a control signal to the automatable function, in dependence on whether the message is an opt-in message or an opt-out message,
wherein the determining which one of an opt-in message or an opt-out message will be presented comprises determining (404) which one of the opt-in message or a first type of opt-out message or a second type of opt-out message will be presented,
wherein the first type of opt-out message is a notifying message to notify the user of upcoming vehicle-initiated activation of the automatable function and enabling the user to intervene to prevent the upcoming vehicle-initiated activation, and
wherein the second type of opt-out message is a feedback message to inform the user that vehicle-initiation of the automatable function has occurred.

13. Computer software (208) that, when executed, is arranged to perform a method (400) according to claim 12.

## Patentansprüche

1. Steuerungssystem (200) zur Schnittstellenbildung mit einer automatisierbaren Funktion (214) eines Fahrzeugs, das Steuerungssystem umfassend eine oder mehrere Steuerungen (201), wobei das Steuerungssystem konfiguriert ist zum:
Bestimmen (402), dass eine Eintrittsbedingung für die automatische Aktivierung der automatisierbaren Funktion erfüllt ist;
Bestimmen (404), welche von einer Opt-in-Meldung oder einer Opt-out-Meldung einem Benutzer dargestellt wird, basierend auf der Erfüllung der Eingabebedingung, wobei die Bestimmung von Benutzerantwortverlaufsinformationen (406) abhängt, die auf einer oder mehreren früheren Benutzerantworten auf eine oder mehrere frühere Opt-in-Meldungen und/oder auf eine oder mehrere frühere Opt-out-Meldungen basieren;
Veranlassen der Darstellung (410, 420, 432) der Meldung für den Benutzer, wobei es sich bei der Meldung um die bestimmte eine der Opt-in-Meldung oder der Opt-out-Meldung handelt; und
Ausgeben (414, 424, 430) eines Steuersignals an die automatisierbare Funktion, in Abhängigkeit davon, ob es sich bei der Meldung um eine Opt-in-Meldung oder eine Opt-out-Meldung handelt,
wobei das Bestimmen, welche von einer Opt-in-Meldung oder einer Opt-out-Meldung dargestellt wird, das Bestimmen (404) umfasst, welche von der Opt-in-Meldung oder einem ersten Typ von Opt-out-Meldung oder einem zweiten Typ von Opt-out-Meldung dargestellt wird,
wobei der erste Typ von Opt-out-Meldung eine Benachrichtigungsnachricht ist, die den Benutzer über eine bevorstehende, vom Fahrzeug initiierte Aktivierung der automatisierbaren Funktion informiert und es dem Benutzer ermöglicht, einzugreifen, um die bevorstehende vom Fahrzeug initiierte Aktivierung zu verhindern, und
wobei der zweite Typ von Opt-out-Meldung eine Feedback-Meldung ist, um den Benutzer darüber zu informieren, dass die vom Fahrzeug initiierte Aktivierung der automatisierbaren Funktion stattgefunden hat.

2. Steuerungssystem nach Anspruch 1, wobei die Opt-in-Meldung eine Vorschlagsnachricht ist, um eine vom Benutzer initiierte Aktivierung der automatisierbaren Funktion vorzuschlagen.

3. Steuerungssystem nach einem der vorstehenden Ansprüche, wobei die eine oder mehreren früheren Opt-in-Meldungen und/oder die eine oder mehreren früheren Opt-out-Meldungen mit der automatisierbaren Funktion verknüpft sind.

4. Steuerungssystem nach einem der vorstehenden Ansprüche, das konfiguriert ist zum Aktualisieren (440) der Benutzerantwortverlaufsinformationen basierend auf einer bestimmten Benutzerantwort (412, 422, 434) auf die dargestellte Meldung.

5. Steuerungssystem nach Anspruch 3, wobei das Steuerungssystem konfiguriert ist, wenn die bestimmte Benutzerantwort die Annahme einer dargestellten Opt-in-Meldung umfasst, um die Benutzerantwortverlaufsinformationen zu aktualisieren, um zu ermöglichen, dass zukünftige Meldungen Opt-out-Meldungen sind.

6. Steuerungssystem nach Anspruch 4 oder 5, wobei das Steuerungssystem konfiguriert ist, wenn die bestimmte Benutzerantwort ein Ignorieren einer dargestellten Opt-out-Meldung umfasst, um die Benutzerantwortverlaufsinformationen zu aktualisieren, um zu ermöglichen, dass zukünftige Meldungen Opt-out-Meldungen sind.

7. Steuerungssystem nach Anspruch 4, 5 oder 6, wobei, wenn die bestimmte Benutzerantwort ein Eingreifen als Antwort auf eine dargestellte Opt-out-Meldung umfasst, um die automatische Aktivierung der automatisierbaren Funktion zu verhindern oder rückgängig zu machen, das Steuerungssystem konfiguriert ist, um die Benutzerantwortverlaufsinformationen dahingehend zu aktualisieren, dass zukünftige Meldungen Opt-in-Meldungen sein müssen.

8. Steuerungssystem nach Anspruch 7, wobei das Bestimmen, dass der Benutzer eingegriffen hat, um die automatische Aktivierung der automatisierbaren Funktion zu verhindern oder rückgängig zu machen, von einer bestimmten Zeitverzögerung zwischen der Darstellung der Opt-out-Meldung und der Erkennung des Eingriffs abhängt.

9. Steuerungssystem nach einem der vorstehenden Ansprüche, wobei die automatisierbare Funktion eines umfasst von: einer HVAC-Funktion (Heizungs-, Lüftungs- und Kühlungsfunktion) des Fahrzeugs; einer Sitzkomfortfunktion; einer Benachrichtigungsfunktion für Kommunikationsereignisse; oder einer ADAS-Funktion (Advanced Driver Assistance System-Funktion).

10. Steuerungssystem nach einem der vorstehenden Ansprüche, das konfiguriert ist zum: Bestimmen einer dem Benutzer oder einer Benutzervorrichtung zugeordneten Identität (408); und unter Verwendung der Identität, Erhalten von Benutzerantwortverlaufsinformationen.

11. Fahrzeug (1), umfassend ein Steuerungssystem (200) nach einem der vorstehenden Ansprüche.

12. Verfahren (400) zur Schnittstellenbildung mit einer automatisierbaren Funktion eines Fahrzeugs, wobei das Verfahren umfasst:
Bestimmen (402), dass eine Eintrittsbedingung für die automatische Aktivierung der automatisierbaren Funktion erfüllt ist;
Bestimmen (404), welche von einer Opt-in-Meldung oder einer Opt-out-Meldung einem Benutzer dargestellt wird, basierend auf der Erfüllung der Eingabebedingung, wobei die Bestimmung von Benutzerantwortverlaufsinformationen (406) abhängt, die auf einer oder mehreren früheren Benutzerantworten auf eine oder mehrere frühere Opt-in-Meldungen und/oder auf eine oder mehrere frühere Opt-out-Meldungen basieren;
Veranlassen der Darstellung (410, 420, 432) der Nachricht für den Benutzer, wobei es sich bei der Nachricht um die bestimmte eine der Opt-in-Nachricht oder der Opt-out-Nachricht handelt; und
Ausgeben (414, 424, 430) eines Steuersignals an die automatisierbare Funktion, in Abhängigkeit davon, ob es sich bei der Nachricht um eine Opt-in-Nachricht oder eine Opt-out-Nachricht handelt,
wobei das Bestimmen, welche von einer Opt-in-Meldung oder einer Opt-out-Meldung dargestellt wird, das Bestimmen (404) umfasst, welche von der Opt-in-Meldung oder einem ersten Typ von Opt-out-Meldung oder einem zweiten Typ von Opt-out-Meldung dargestellt wird,
wobei der erste Typ von Opt-out-Meldung eine Benachrichtigungsnachricht ist, die den Benutzer über eine bevorstehende, vom Fahrzeug initiierte Aktivierung der automatisierbaren Funktion informiert und es dem Benutzer ermöglicht, einzugreifen, um die bevorstehende vom Fahrzeug initiierte Aktivierung zu verhindern, und
wobei der zweite Typ von Opt-out-Meldung eine Feedback-Meldung ist, um den Benutzer darüber zu informieren, dass die vom Fahrzeug initiierte Aktivierung der automatisierbaren Funktion stattgefunden hat.

13. Computersoftware (208), die, wenn sie ausgeführt wird, angeordnet ist, um ein Verfahren (400) nach Anspruch 12 durchzuführen.

## Revendications

1. Système de commande (200) destiné à être en interface avec une fonction automatisable (214) d'un véhicule, le système de commande comprenant un ou plusieurs dispositifs de commande (201), le système de commande étant configuré pour :
déterminer (402) qu'une condition d'entrée pour une activation automatique de la fonction automatisable est satisfaite ;
déterminer (404) lequel d'un message d'adhésion ou d'un message de retraite sera présenté à un utilisateur sur la base d'une satisfaction de la condition d'entrée, dans lequel la détermination dépend d'informations d'historique de réponses utilisateur (406) sur la base d'une ou plusieurs réponses utilisateur antérieures à un ou plusieurs messages d'adhésion antérieurs et/ou à un ou plusieurs messages de retraite antérieurs ;
provoquer une présentation (410, 420, 432) du message à l'utilisateur, dans lequel le message est le message déterminé parmi le message d'adhésion ou le message de retraite ; et
émettre (414, 424, 430) un signal de commande vers la fonction automatisable, selon que le message est un message d'adhésion ou un message de retraite,
dans lequel la détermination duquel parmi un message d'adhésion ou d'un message de retraite sera présenté comprend la détermination (404) duquel parmi un message d'adhésion ou d'un premier type de message de retraite ou d'un second type de message de retraite sera présenté,
dans lequel le premier type de message de retraite est un message de notification destiné à notifier l'utilisateur de l'activation imminente à l'initiative du véhicule de la fonction automatisable et à permettre à l'utilisateur d'intervenir pour empêcher l'activation imminente à l'initiative du véhicule, et
dans lequel le second type de message de retraite est un message de retour d'informations informant l'utilisateur que la fonction automatisable a été initiée par le véhicule.

2. Système de commande selon la revendication 1, dans lequel le message d'adhésion est un message de suggestion suggérant une activation de la fonction automatisable à l'initiative de l'utilisateur.

3. Système de commande selon l'une quelconque revendication précédente, dans lequel le ou les messages d'adhésion antérieurs et/ou le ou les messages de retraite antérieurs sont associés à la fonction automatisable.

4. Système de commande selon l'une quelconque revendication précédente, configuré pour mettre à jour (440) les informations d'historique de réponses utilisateur sur la base d'une réponse utilisateur déterminée (412, 422, 434) au message présenté.

5. Système de commande selon la revendication 3, dans lequel, si la réponse utilisateur déterminée comprend l'acception d'un message d'adhésion présenté, le système de commande est configuré pour mettre à jour les informations d'historique de réponses utilisateur afin de permettre à de futurs messages d'être des messages de retraite.

6. Système de commande selon la revendication 4 ou 5, dans lequel, si la réponse utilisateur déterminée comprend le fait d'ignorer un message de retraite présenté, le système de commande est configuré pour mettre à jour les informations d'historique de réponse utilisateur afin de permettre à des futurs messages d'être des messages de retraite.

7. Système de commande selon la revendication 4, 5 ou 6, dans lequel, si la réponse utilisateur déterminée comprend une intervention en réponse à un message de retraite présenté, pour empêcher ou annuler une activation automatique de la fonction automatisable, le système de commande est configuré pour mettre à jour les informations d'historique de réponses utilisateur afin d'exiger que des futurs messages soient des messages d'adhésion.

8. Système de commande selon la revendication 7, dans lequel le fait de déterminer que l'utilisateur est intervenu pour empêcher ou annuler l'activation automatique de la fonction automatisable dépend d'un délai déterminé entre la présentation du message de retraite et une détection de l'intervention.

9. Système de commande selon l'une quelconque revendication précédente, dans lequel la fonction automatisable comprend l'une parmi : une fonction de chauffage, aération, climatisation, HVAC, du véhicule ; une fonction de confort de siège ; une fonction de notification d'événement de communication ; ou une fonction de système avancé d'aide à la conduite, ADAS.

10. Système de commande selon l'une quelconque revendication précédente, configuré pour : déterminer une identité (408) associée à l'utilisateur ou à un dispositif utilisateur ; et à l'aide de l'identité, obtenir les informations d'historique de réponses utilisateur.

11. Véhicule (1) comprenant un système de commande (200) selon l'une quelconque des revendications précédentes.

12. Procédé (400) permettant la mise en interface avec une fonction automatisable d'un véhicule, le procédé comprenant :
le fait de déterminer (402) qu'une condition d'entrée pour une activation automatique de la fonction automatisable est satisfaite ;
la détermination (404) duquel parmi un message d'adhésion ou d'un message de retraite sera présenté à un utilisateur sur la base d'une satisfaction de la condition d'entrée, dans lequel la détermination dépend des informations d'historique de réponses utilisateur (406) sur la base d'une ou plusieurs réponses utilisateur antérieures à un ou plusieurs messages d'adhésion antérieurs et/ou à un ou plusieurs messages de retraite antérieurs ;
le fait de provoquer une présentation (410, 420, 432) du message à l'utilisateur, dans lequel le message étant un message déterminé parmi le message d'adhésion ou le message de retraite ; et
l'émission (414, 424, 430) d'un signal de commande vers la fonction automatisable, selon que le message est un message d'adhésion ou un message de retraite,
dans lequel la détermination duquel parmi un message d'adhésion ou d'un message de retraite sera présenté comprend la détermination (404) duquel parmi un message d'adhésion ou d'un premier type de message de retraite ou d'un second type de message de retraite sera présenté,
dans lequel le premier type de message de retraite est un message de notification destiné à notifier l'utilisateur de l'activation imminente à l'initiative du véhicule de la fonction automatisable et à permettre à l'utilisateur d'intervenir pour empêcher l'activation imminente à l'initiative du véhicule, et
dans lequel le second type de message de retraite est un message de retour d'informations informant l'utilisateur que la fonction automatisable a été initiée par le véhicule.

13. Logiciel informatique (208) qui, lorsqu'il est exécuté, est conçu pour réaliser un procédé (400) selon la revendication 12.
